(19) Europäisches Patentamt
European Patent Office
Office européen des brevets

(11) Veröffentlichungsnummer: **0 075 246**
**B1**

# (12) EUROPÄISCHE PATENTSCHRIFT

(45) Veröffentlichungstag der Patentschrift: **18.12.85**

(51) Int. Cl.⁴: **G 01 N 31/16**

(21) Anmeldenummer: **82108457.1**

(22) Anmeldetag: **14.09.82**

(54) **Zweikomponenten-Titriermittel.**

(30) Priorität: **17.09.81 DE 3136942**

(43) Veröffentlichungstag der Anmeldung: **30.03.83 Patentblatt 83/13**

(45) Bekanntmachung des Hinweises auf die Patenterteilung: **18.12.85 Patentblatt 85/51**

(84) Benannte Vertragsstaaten: **AT BE CH DE FR GB IT LI LU NL SE**

(56) Entgegenhaltungen:
**EP - A - 0 035 066**
**GB - A - 2 062 859**

**JOURNAL OF AMERICAN CHEMICAL SOCIETY, Band 61, 1939, D.M. SMITH et al. "Analytical procedures employing Karl Fischer reagent", Seiten 2407-2412**
**FRESENIUS ZEITSCHRIFT FÜR ANALYTISCHE CHEMIE, Band 303, 1980, E. SCHOLZ "Karl Fischer-Reagentien ohne Pyridin", Seiten 203-207**

(73) Patentinhaber: **RIEDEL-DE HAEN AKTIENGESELLSCHAFT, Wunstorfer Strasse 40, D-3016 Seelze 1 (DE)**

(72) Erfinder: **Scholz, Eugen, Dr., Silberweg 8, D-3008 Garbsen (DE)**

(74) Vertreter: **Meyer-Dulheuer, Karl-Hermann, Dr. et al, HOECHST Aktiengesellschaft Zentrale Patentabteilung Postfach 80 03 20, D-6230 Frankfurt/Main 80 (DE)**

EP 0 075 246 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Zweikomponenten-Titriermittel für die Wasserbestimmung nach Karl Fischer, das aus einer Schwefeldioxid und ein Amin enthaltenden Lösung A und einer Jod enthaltenden Lösung B besteht sowie auf ein Mittel zur Rücktitration bei der vorhin genannten Methode.

Die massanalytische Bestimmung des Wassergehaltes von Flüssigkeiten und festen Körpern wurde bekanntlich von Karl Fischer entwickelt; sie beruht auf der Oxidation von Schwefeldioxid durch Jod in Gegenwart von Wasser nach der Gleichung

$$2\,H_2O + SO_2 + J_2 \rightleftharpoons H_2SO_4 + 2\,HJ,$$

und die Reaktion wird üblicherweise in wasserfreiem Methanol durchgeführt. Das Reagenz besteht aus einer Lösung von 790 g Pyridin, 192 g flüssigem Schwefeldioxid und 254 g Jod in 5 l wasserfreiem Methanol (vgl. Angew. Chemie 48 (1935), 394). Da diese Lösung nicht lagerstabil ist, wird in der Praxis meist ein Zweikomponentenreagenz verwendet, das einerseits aus einer Lösung von Schwefeldioxid und Pyridin in Methanol und andererseits aus einer Lösung von Jod in Methanol besteht.

Ferner ist bereits bekannt, dass an Stelle von Pyridin zwar auch andere Stickstoffbasen verwendet wurden, aber keine Vorteile zeigten, z.B. Chinolin, Anilin, Dimethylanilin, Tri-n-butylamin und Triethanolamin (vgl. J. Amer. Chem. Soc. 1939, 2407). Weitere Amine, die als Pyridin-Ersatz dienen sollten, sind Ethanolamin und Hexamethylentetramin; diese Amine sollen jedoch den Nachteil haben, dass sie keinen stabilen Titrationspunkt anzeigen oder störende Ausfällungen verursachen (vgl. Analytic. Chem. 28 (1956), 1166). Dieses modifizierte KF-Reagenz diente zur Bestimmung von Wasser in Oxidationsmittel, Reduktionsmitteln und Aminen.

Weiterhin ist schon versucht worden, das im Einkomponenten KF-Reagenz verwendete Lösemittel Methanol teilweise durch andere Lösemittel zu ersetzen; insbesondere wurden Benzol, Dioxan, Eisessig, Ethanol, Acetonitril und Dimethylformamid hierzu eingesetzt (vgl. Chemical Analysis, Volum 5, Aquametry, Part III, Seiten 101 + 102, 1980, 2. Auflage, Verlag John Wiley & Sons). Die meisten dieser Ersatzmittel hatten den Nachteil, dass sie die entstehenden Aminsalze nicht zu lösen vermochten und den Endpunkt der Titration undeutlich machten.

Aufgabe der Erfindung ist nun die Bereitstellung eines aus zwei Komponenten A und B (Solvent und Titrant) bestehenden KF-Reagenzes, wobei die Titrierkomponente unempfindlich gegen Luftfeuchtigkeit sein soll.

Die Erfindung betrifft ein Zweikomponenten-Titriermittel für die Wasserbestimmung nach Karl Fischer gemäss Anspruch 1, sowie ein Mittel zur Rücktitration bei dieser Methode gemäss Anspruch 3.

Insbesondere enthält das erfindungsgemässe Titriermittel in der Lösung A Schwefeldioxid in einer Menge von 0,1 bis 10 Mol, vorzugsweise 0,5 bis 3 Mol (bezogen auf 1 Liter Lösung) und ein Amin in einer Menge von 0,1 bis 10 Mol, vorzugsweise 0,5 bis 5 Mol (bezogen auf 1 Liter Lösung. In der Lösung B ist Jod insbesondere in einer Menge von 0,01 bis 3 Mol, vorzugsweise 0,1 bis 1 Mol enthalten (bezogen auf 1 Liter Lösung).

Das Schwefeldioxid kann auch im Gemisch mit einer Säure, vorzugsweise einer Cerbonsäure, eingesetzt werden. Das Molverhältnis von Schwefeldioxid zu Säure beträgt dabei 20:1 bis 1:5 und vorzugsweise 2:1 bis 1:2. Als Säuren sind beispielsweise Propionsäure, Salicylsäure, Schwefelsäure, Jodwasserstoffsäure und insbesondere Essigsäure geeignet.

Das in der Lösung A enthaltene Amin ist üblicherweise Pyridin oder ein aliphatisches, gegebenenfalls 1, 2 oder 3 Sauerstoffatome enthaltendes Amin oder eine fünf- oder sechsgliedrige, gegebenenfalls substituierte, heterocyclische Verbindung mit mindestens 2 Heteroatomen, wobei mindestens 1 Heteroatom ein Stickstoffatom ist.

Das aliphatische Amin ist entweder cyclisch oder vorzugsweise acyclisch. Das Amin kann 1, 2 oder 3 Sauerstoffatome aufweisen, vorzugsweise in Form von Hydroxylgruppen. Besonders geeignet ist ein acyclisches primäres Amin, das 2 bis 6 Kohlenstoffatome aufweist und gegebenenfalls 1, 2 oder 3 Hydroxylgruppen enthält. Geeignete Amine sind beispielsweise Morpholin, Piperidin, Piperazin, n-Propylamin, Isopropylamin, Diethylamin, Triethylamin, Dimethylaminopropylamin, Ethanolamin, Diethanolamin, Triethanolamin, Tris(hydroxymethyl)-aminomethan und Guanidin. Das Molverhältnis von Amin zu Schwefeldioxid liegt im Bereich von 0,5:1 bis 1,3:1, vorzugsweise von 0,8:1 bis 1,2:1.

Die heterocyclische Verbindung enthält fünf oder sechs Ringglieder und ist gegebenenfalls substituiert, vorzugsweise mit 1, 2 oder 3 Alkylresten mit jeweils 1 bis 4 Kohlenstoffatomen oder mit 1, 2 oder 3 Phenylresten; die heterocyclische Verbindung enthält mindestens 2, vorzugsweise 2 oder 3 Heteroatome, von denen mindestens eins ein Stickstoffatom ist. Besonders geeignet ist eine fünfgliedrige, gegebenenfalls substituierte, heterocyclische Verbindung mit 2 Stickstoffatomen als Heteroatom. Das Molverhältnis von heterocyclischer Verbindung zu Schwefeldioxid liegt normalerweise im Bereich von 10:1 bis 0,3:1, vorzugsweise von 2:1 bis 0,5:1.

Als heterocyclische Verbindung eignet sich insbesondere Imidazol oder ein Imidazolderivat, vorzugsweise eine Verbindung der Formel

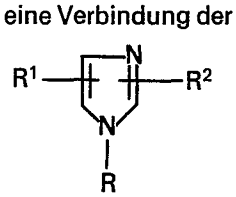

in der R, $R^1$ und $R^2$ gleich oder verschieden sind und jeweils ein Wasserstoffatom, einen niederen,

vorzugsweise 1 bis 4 Kohlenstoffatome aufweisenden Alkylrest oder einen Phenylrest bedeuten.

Beispiele für erfindungsgemäss verwendete heterocyclische Verbindungen sind vor allem Imidazol, 1-Methylimidazol, 1-Ethylimidazol, 1-Propylimidazol, 1-Butylimidazol, 2-Methylimidazol, 2-Ethylimidazol, 2-Iropylimidazol, 2-Butylimidazol, 4-Methylimidazol, 4-Butylimidazol, 1,2-Dimethylimidazol, 1,2,4-Trimethylimidazol, 1-Phenylimidazol, 2-Phenylimidazol und Benzimidazol, ferner Imidazolin, 2-Methylimidazolin (Lysidin), 2-Phenylimidazolin sowie Thiazol, 2-Methyltiazol, 2-Ethylthiazol, 4-Methylthiazol, 4-Ethylthiazol, 2-Phenylthiazol, 4-Phenylthiazol, Benzothiazol, Pyrimidin, 4-Methylpyrimidin, 4-Ethylpyrimidin, 1,3,5-Triazin und 1,2,4-Triazin.

Als Lösemittel für die Lösung A des erfindungsgemässen Titriermittels dient ein wasserfreier niedermolekularer Alkohol mit vorzugsweise 1, 2 oder 3 Kohlenstoffatomen, insbesondere Methanol, Ethanol, Propanol-(2), n-Butanol, Ethylenglykol und Ethylenglykolmonomethylether.

Das wesentliche Merkmal des erfindungsgemässen Titriermittels ist die Tatsache, dass das Lösungsmittel für die Lösung B ein wasserfreies Lösemittel ist, das zu mindestens 60 Gewichtsprozent aus einem hydroxylgruppenfreien, nichthygroskopischen, flüssigen Kohlenwasserstoff oder einem flüssigen Halogenkohlenwasserstoff, vorzugsweise einem Chlorkohlenwasserstoff und zu höchstens 40 Gewichtsprozent aus einem niedermolekularen Alkohol besteht.

Der Kohlenwasserstoff ist ein alipatischer Kohlenwasserstoff mit 5 bis 10 Kohlenstoffatomen, vorzugsweise 6, 7 oder 8 Kohlenstoffatomen, oder ein aromatischer, gegebenenfalls alkylsubstituierter Kohlenwasserstoff mit 6 bis 12 Kohlenstoffatomen, vorzugsweise 6, 7 oder 8 Kohlenstoffatomen. Beispiele hierfür sind n-Pentan, n-Hexan, 2,3-Dimethylbutan, 3-Methylhexan, Methylcyclopentan, n-Heptan, Cycloheptan, i-Octan und Dekahydronaphthalin sowie Benzol, Toluol, 1,2-Diethylbenzol, Xylol und 1,3-Dimethylnaphthalin. Der Halogenkohlenwasserstoff ist ein aliphatischer Halogenkohlenwasserstoff mit 1 bis 10 Kohlenstoffatomen, vorzugsweise 1 bis 7 Kohlenstoffatomen, oder ein aromatischer Halogenkohlenwasserstoff mit 6 bis 10 Kohlenstoffatomen, vorzugsweise 6 oder 7 Kohlenstoffatomen. Beispiele hierfür sind Chloroform, Dichlormethan, Tetrachlormethan, 1,1,2,3-Tetrachlorethan, 1,1,1-Trichlorethan, 2-Brombutan, 1-Brom-3-chlorpropan, 1-Chlorhexan, 1,2-Dibrom- 1,1-dichlorethan, 1,2-Dibrom-1,1-difluorethan, 1,2- Dichlorethan, 1,6-Dichlorhexan, 2,2-Dichlorpropan, 1-Fluorheptan, Pentachlorethan und Perfluorbutyljodid sowie Chlorbenzol, 3-Chlortoluol, 4-Bromchlorbenzol, 1,2-Dibrombenzol, 1,4-Difluorbenzol, Benzylchlorid und 3-Brombenzotrifluorid.

Vorzugsweise ist das Lösemittel der Lösung B aus mindestens 70 Gewichtsprozent des hydroxylgruppenfreien, nicht-hygroskopischen flüssigen Kohlenwasserstoffs und höchstens 30 Gewichtsprozent eines niedermolekularen Alkohols zusammengesetzt. Der Alkohol entspricht dem Lösemittel für die Lösung A.

Die beiden Komponenten des erfindungsgemässen Titriermittels werden jeweils für sich hergestellt durch Lösen der jeweiligen Agentien in dem jeweiligen Lösemittel, das eine Temperatur von 15 bis 50 °C, vorzugsweise 20 bis 40 °C aufweist. Besondere Massnahmen zum Ausschluss von Luftfeuchtigkeit sind dabei nicht erforderlich.

Das erfindungsgemässe Titriermittel eignet sich ausgezeichnet zur Bestimmung von Wasser nach der Karl-Fischer-Methode. Als Prüfmaterial sind feste oder flüssige Substanzen verwendbar, z.B. anorganische Salze, organische Lösemittel, Fette, Öle, Lebensmittel und pharmazeutische Präparate. Bei der Anwendung des Titriermittels sind die sonst üblichen Vorsichtsmassnahmen zum Ausschluss von Luftfeuchtigkeit nicht notwendig, so dass man mit normalen Titriegeräten arbeiten kann. Eine ständige Kontrolle des Titers kann entfallen, da das Titriermittel titerstabil und lagerstabil ist.

Das erfindungsgemäss für die Lösung B verwendete Lösemittel eignet sich auch als Mittel zur Rücktitration nach der Karl-Fischer-Methode, wobei das Mittel eine definierte Menge Wasser enthält.

Die folgenden Beispiele dienen zur näheren Erläuterung der Erfindung. Prozentangaben beziehen sich auf das Gewicht.

Beispiel 1

In 600 ml Methanol werden bei Raumtemperatur 192 g (= 3 mol) Schwefeldioxid und 356 g (= 4 mol) Pyridin gelöst (Lösung A). Ein einem handelsüblichen Gemisch aus o-, m- und p-Xylol werden bei Raumtemperatur 75 g (= 0,6 mol) Jod zu einem Liter Lösung gelöst (Lösung B). Die Lösung B, die als Titrant zusammen mit der Lösung A verwendet wird, hat einen Titer von 5,21 mg $H_2O$/ml.

Der Titer der Lösung B fällt kaum ab, wenn die Lösung B mehrere Stunden lang in einem offenen Glas bei Raumtemperatur stehen gelassen wird. Er beträgt nach 1 Stunde 5,24 mg $H_2O$/ml, nach 2 Stunden 5,27 mg $H_2O$/ml, nach 3 Stunden 5,32 mg $H_2O$/ml und nach 5 Stunden 5,40 mg $H_2O$/ml. Im Vergleich dazu ist der Titer einer analog hergestellten konventionellen Titrierlösung mit Methanol statt Xylol als Lösemittel von anfänglich 5,20 mg $H_2O$/ml nach 1 Stunde auf 1,23 mg $H_2O$/ml und nach 2 Stunden auf Null abgefallen.

Beispiel 2

Analog Beispiel 1 werden 28,2 g (= 0,22 mol) Jod in Chloroform zu einem Liter Lösung gelöst (Lösung B). Diese Lösung eignet sich als Titrant für die Lösung A des Beispiels 1; sie hat einen Titer von 2 mg $H_2O$/ml.

Beispiel 3

128 g (= 2 mol) Schwefeldioxid und 210 g (= 2 mol) Diethanolamin werden bei Raumtemperatur in Methanol zu einem Liter Lösung gelöst (Lösung A). In einem Gemisch aus 90% Toluol und 10% Propanol-(2) werden bei Raumtemperatur 56,5 g (= 0,45 mol) Jod zu einem Liter Lösung gelöst (Lösung B). Diese Lösung eignet sich als Titrant für die Lösung A; sie hat einen Titer von 4,00 mg $H_2O$/ml.

Beispiel 4

In einem Gemisch aus 70 g handelsüblichen Xylol und 30 g i-Butanol werden 0,5 g Wasser gelöst. Die erhaltene Lösung ist nicht hygroskopisch; bei normalen klimatischen Bedingungen (20 °C, 50% relative Luftfeuchte) nimmt sie kein Wasser auf. Die Lösung eignet sich als Mittel zur Rücktitration bei der Wasserbestimmung nach der KF-Methode.

**Patentansprüche**

1. Zweikomponenten-Titriermittel für die Wasserbestimmung nach Karl Fischer, bestehend aus einer Lösung A, die eine Lösung von Schwefeldioxid und eines Amins in einem wasserfreien niedermolikularen Alkohol mit 1, 2 oder 3 Kohlenstoffatomen ist, und einer Lösung B, die eine Lösung von Jod in einem wasserfreien Lösemittel ist, dadurch gekennzeichnet, dass das wasserfreie Lösemittel der Lösung B

a) zu mindestens 60 Gewichtsprozent aus einem hydroxylgruppenfreien, nicht-hygroskopischen, flüssigen Kohlenwasserstoff oder flüssigen Halogenkohlenwasserstoff, wobei der Kohlenwasserstoff ein aliphatischer Kohlenwasserstoff mit 5 bis 10 Kohlenstoffatomen oder ein aromatischer, gegebenenfalls alkylsubstituierter Kohlenwasserstoff mit 6 bis 12 Kohlenstoffatomen ist und der Halogenkohlenwasserstoff ein aliphatischer Halogenkohlenwasserstoff mit 1 bis 10 Kohlenstoffatomen oder ein aromatischer Halogenkohlenwasserstoff mit 6 bis 10 Kohlenstoffatomen ist, und

b) zu höchstens 40 Gewichtsprozent aus einem niedermolekularen Alkohol mit 1, 2 oder 3 Kohlenstoffatomen besteht.

2. Titriermittel nach Anspruch 1, dadurch gekennzeichnet, dass der Halogenkohlenwasserstoff ein Chlorkohlenwasserstoff ist.

3. Mittel zur Rücktitration bei der Wasserbestimmung nach der Karl-Fischer-Methode, bestehend aus einem Lösemittel mit definiertem Wassergehalt, dadurch gekennzeichnet, dass das Lösemittel ein wasserfreies Lösemittel gemäss Anspruch 1 ist.

**Revendications**

1. Agent de titrage ou réactif à deux constituants, pour la détermination de l'eau selon la méthode de Karl Fischer, consistant en une solution A, qui est une solution d'anhydride sulfureux et d'une amine dans un alcool anhydre à bas poids moléculaire comportant 1, 2 ou 3 atomes de carbone, et en une solution B, qui est une solution d'iode dans un solvant anhydre, caractérisé en ce que le solvant anhydre de la solution B consiste:

a) pour au moins 60% en poids en un hydrocarbure liquide non hygroscopique, sans groupes hydroxyles ou en un hydrocarbure halogéné liquide, l'hydrocarbure étant un hydrocarbure aliphatique comportant 5 à 10 atomes de carbone ou un hydrocarbure aromatique, comportant éventuellement au moins un substituant alkyle, ayant 6 à 12 atomes de carbone, et l'hydrocarbure halogéné étant un hydrocarbure halogéné aliphatique comportant 1 à 10 atomes de carbone ou un hydrocarbure halogéné aromatique comportant 6 à 10 atomes de carbone, et

b) pour 40% en poids au maximum en un alcool à bas poids moléculaire comportant 1, 2 ou 3 atomes de carbone.

2. Réactif selon la revendication 1, caractérisé en ce que l'hydrocarbure halogéné est un hydrocarbure chloré.

3. Réactif pour le titrage en retour lors de la détermination de l'eau selon la méthode de Karl Fischer, consistant en un solvant ayant une teneur bien définie en eau, caractérisé en ce que le solvant est un solvant anhydre selon la revendication 1.

**Claims**

1. Two-component titrating agent for the determination of water according to Karl Fischer, consisting of a solution A, which is a solution of sulfur dioxide and an amine in an anhydrous low molecular weight alcohol having 1, 2 or 3 carbon atoms, and a solution B, which is a solution of iodine in an anhydrous solvent, characterized in that the anhydrous solvent of the solution B consists of

a) at least 60 per cent by weight of a hydroxylfree non-hygroscopic liquid hydrocarbon or liquid halogenated hydrocarbon, the hydrocarbon being an aliphatic hydrocarbon having 1 to 10 carbon atoms or an – optionally alkyl-substituted – aromatic hydrocarbon having 6 to 12 carbon atoms and the halogenated hydrocarbon being an aliphatic halogenated hydrocarbon having 1 to 10 carbon atoms or an aromatic halogenated hydrocarbon having 6 to 10 carbon atoms, and

b) at most 40 per cent by weight of a low molecular weight alcohol having 1, 2 or 3 carbon atoms.

2. Titrating agent according to claim 1, characterized in that the halogenated hydrocarbon is a chlorinated hydrocarbon.

3. Agent for backtitrating in the determination of water according to the Karl Fischer method, consisting of a solvent having a defined water content, characterized in that the solvent is an anhydrous solvent according to claim 1.